# EUROPÄISCHE PATENTSCHRIFT

(11) **EP 0 998 342 B1**
(45) Veröffentlichungstag und Bekanntmachung des Hinweises auf die Patenterteilung: **05.02.2003**
(21) Anmeldenummer: 98937567.0
(22) Anmeldetag: 11.07.1998
(51) Int. Cl.: B01D 35/147, B01D 29/21, F01M 11/03

(54) **FILTERANORDNUNG**
FILTER ASSEMBLY
ENSEMBLE FILTRE

(30) Priorität: 23.07.1997 DE 19731556
(43) Veröffentlichungstag der Anmeldung: 10.05.2000
(73) Patentinhaber: FILTERWERK MANN & HUMMEL GmbH, 71631 Ludwigsburg (DE)
(72) Erfinder: JAINEK, Herbert, D-74074 Heilbronn (DE); PAVLIN, Jaroslav, D-71691 Freiberg (DE); WIEDERHOLD, Roland, D-50933 Köln (DE)
(74) Vertreter: Voth, Gerhard, Dipl.-Ing.
(86) Internationale Anmeldenummer: EP9804305
(87) Internationale Veröffentlichungsnummer: WO99004880

(56) Entgegenhaltungen:
- EP-A- 0 580 491
- EP-A- 0 723 796
- EP-A- 0 773 054
- EP-B- 0 259 594
- WO-A-98/18539
- DE-A- 4 240 656
- FR-A- 2 465 507

## Beschreibung

### Stand der Technik

Die Erfindung betrifft eine Filteranordnung für eine zu filternde Flüssigkeit mit einem Umgehungsventil, nach dem Oberbegriff des Hauptanspruchs.

Es sind Ölfilteranordnungen für die Filtrierung des Schmieröls in einem Kraftfahrzeug bekannt, bei denen eine auswechselbare Papierfilterpatrone in den Ölkreislauf eingefügt ist. In das Gehäuse des Ölfilters ist ein Mittelrohr eingefügt, bzw. eingeschnappt, auf das die hohlzylindrische Filterpatrone aufgesteckt wird. Das zu reinigende Öl wird außen an die Papierlagen der Filterpatrone geführt und strömt durch die Filterpatrone und durch die Öffnungen des in der Regel gitterartigen Mittelrohres in das Innere des Mittelrohres und von dort über einen Auslass zurück in den Ölkreislauf.

Um auch bei Verstopfungen oder ähnlichen Betriebsstörungen einen Ölfluss zu gewährleisten, ist an der Pilteranordnung ein Umgehungsventil in einem Umgehungskanal angebracht, das bei einem zu hohem Druck des zu filternden Öls öffnet und einen Ölfluss zum Auslass gewährleistet.

Die EP 0 580 491 offenbart eine Filteranordnung zur Reinigung von Flüssigkeiten. Hierzu verfügt die Filteranordnung über ein Gehäuse, in welchem ein Filterelement angeordnet ist. Weiterhin verfügt die Filteranordnung über ein Umgehungsventil, welches einen Umgehungskanal öffnen oder verschließen kann. Bei geöffnetem Umgehungskanal kann die Flüssigkeit ungefiltert aus dem Filtergehäuse ausströmen. Das Umgehungsventil wird durch eine Feder und eine Ventilplatte gebildet. Die Montage der Filtereinrichtung mit dem Umgehungsventil ist montagetechnisch schwer zu handhaben, da die Feder des Umgehungsventils durch einen das Umgehungsventil umgebenden Stützkörper geführt werden muss.

Das Dokument FR 2 465 507 offenbart ein Rundfilterelement, welches über ein zentrisch angeordnetes Umgehungsventil verfügt. Das Umgehungsventil weist eine Ventilplatte und eine Ventilfeder auf. Die Ventilplatte wird in eine Aufnahme eingebracht, welche über einen Ventilsitz verfügt. Die Ventilplatte wird von der Ventilfeder gegen den Ventilsitz gedrückt, wobei sich die Feder an einem die Aufnahme umgebenden Käfig abstützt. Der Käfig ist einstückig an ein Stützrohr angeformt, wobei das Stützrohr über eine angeformte Endscheide verfügt. Das den Käfig, das Stützrohr und die Endscheibe aufweisende Bauteil verfügt über komplizierte Formen, wodurch die Herstellung dieses Bauteils aufwendig ist.

### Aufgabenstellung

Der Erfindung liegt die Aufgabe zugrunde, eine Filteranordnung der eingangs angegebenen Art so fortzubilden, dass eine einfache Herstellung und ein kompakter Aufbau erreichbar ist.

### Vorteile der Erfindung

Die erfindungsgemäße Filteranordnung weist in vorteilhafter Weise ein in das Mittelrohr der Filteranordnung während der Herstellung einfach zu integrierendes Umgehungsventil auf. Im Mittelrohr ist hierzu eine ringförmige Durchmesserverengung vorgesehen, in die innen das Umgehungsventils zunächst lose mit dem Ventilkörper und der Ventilfeder hineingelegt werden kann.

Als Anlage für den Ventilkörper sind hinter der Durchmesserverengung axial verlaufende Stege im Mittelrohr angeordnet, wobei diese Ausnehmungen aufweisen, die der Kontur des Ventilkörpers mit der Feder derart angepasst sind, dass die Stege als Ventilkappe wirken. Der Ventilsitz des Ventilkörpers, mit dem nach der Beendigung der Montage die Dichtfläche hergestellt wird, ragt in diesem Herstellungsstadium, im ungespannten Zustand der Ventilfeder, leicht über die Durchmesserverengung heraus. Das Mittelrohr, die Durchmesserverengung und die sternförmig im Inneren liegenden Stege lassen sich auf einfache Weise einstückig als Kunststoffspritzgussteil herstellen.

Das funktionsfähige Umgehungsventil wird auf einfache Weise mit einer Ventilplatte gebildet, die zur dichten Anlage an den Ventilsitz des Ventilkörpers gegen den Druck der Ventilfeder außen an der Durchmesserverengung dauerhaft befestigt wird. Die am Ventilsitz eventuell auch elastomerbeschichtete Ventilplatte ist in vorteilhafter Weise aus Kunststoff hergestellt und ist beispielsweise durch Ultraschallverschweißen oder Rotationsschweißen bzw. durch Verstemmen oder Verschnappen mit Dichtlippen mit der Durchmesserverengung des Mittelrohres verbunden.

Erfindungsgemäß lässt sich das Umgehungsventil in ein einfach hergestelltes Mittelrohr mit wenigen Arbeitsgängen integrieren. Der Ventilkörper kann mitsamt der Ventilfeder zunächst vorgefertigt und lose in die als Ventilkappe wirkende Stege eingelassen werden und dann in nur einem Fertigungsschritt mittels der Anbringung der Ventilplatte befestigt werden.

Die erfindungsgemäße Filteranordnung erlaubt bei einer einfachen Herstellungsweise somit einen äußerst kompakten Aufbau, so dass bei einer Anwendung der Filteranordnung in einer Konditioniereinheit für das Schmieröl in einem Kraftfahrzeug eine einfache Montage möglich ist. Die Filteranordnung ist hierzu mit ihrem Gehäusedeckel an einen Grundkörper anfügbar, der einen Öl-Kühlmittel-Wärmetauscher und ein weiteres Umgehungsventil für den Öl-Kühlmittel-Wärmetauscher beinhaltet. Außerdem ist an den Grundkörper, vorzugsweise aus Aluminium oder Kunststoff, ein Ölkühler angefügt.

### Zeichnung

Ein Ausführungsbeispiel der erfindungsgemäßen Filteranordnung wird anhand der Zeichnung erläutert. Es zeigen:
Figur 1 eine Filteranordnung in einer Konditioniereinheit für das Schmieröl eines Kraftfahrzeugs;
Figur 2 eine Detailansicht eines Schnittes des Mittelrohres der Filteranordnung mit einem Umgehungsventil,
Figur 3 eine Ansicht auf das Mittelrohr vor dem Einbringen des Umgehungsventils und
Figur 4 eine Ansicht auf das Mittelrohr mit den Stegen zur Aufnahme des Umgehungsventils.

### Beschreibung des Ausführunqsbeispiels

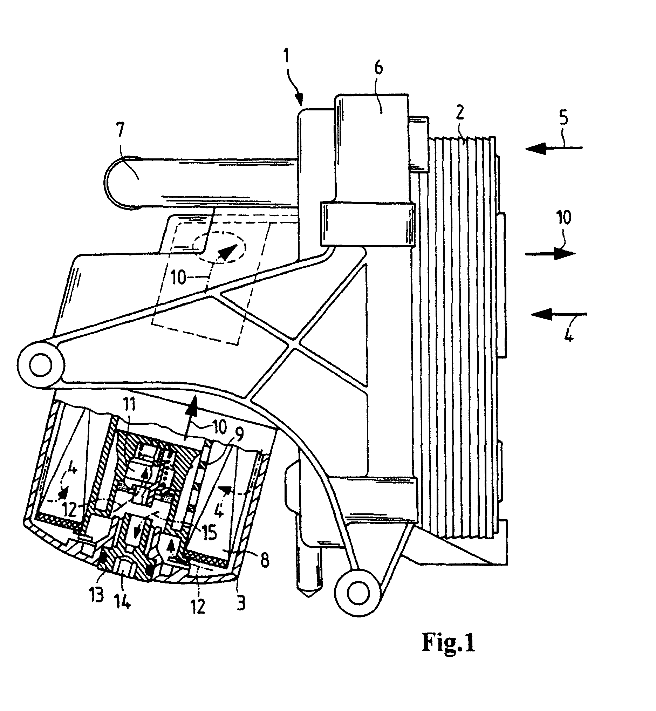

In Figur 1 ist eine Konditioniereinheit 1 für das Schmieröl eines Kraftfahrzeuges gezeigt, bei der das zu filternde Öl durch einen Ölkühler 2 in eine Filteranordnung 3 geleitet wird (Pfeil 4). An der Konditioniereinheit 1 befindet sich noch ein Einlass für ein Kühlmittel (Pfeil 5); das Kühlmittel, in der Regel das Kühlwasser für den Verbrennungsmotor, wird durch einen Öl-Külmittel-Wärmetauscher 6 zu einem Auslass 7 geleitet. Hier ist noch ein, in der Figur 1 nicht sichtbares, Umgehungsventil für den Öl-Külmittel-Wärmetauscher 6 vorhanden. In der Filteranordnung 3 ist eine metallfreie Filterpatrone 8 an einem Mittelrohr 9 angeordnet. Durch die Filterpapierlagen der Filterpatrone und durch Öffnungen im Mittelrohr 9 wird das Öl in das Innere des Mittelrohrs 9 und dann anschließend zum Ausgang (Pfeil 10) der Konditioniereinheit 1 geleitet.

Im Mittelrohr 9 ist ein Umgehungsventil 11 angeordnet, durch das ein Ölstrom über Umgehungskanäle (Pfeile 12) an der Filterpatrone 8 vorbei zum Ausgang geleitet werden kann. Eine Auslassschraube 13 ist über einen Imbus 14 aus dem Gehäuse der Filteranordnung herausschraubbar, womit das in der Konditioniereinheit 1 vorhandene, eventuell auszutauschende Schmieröl abgelassen werden kann (Pfeil 15).

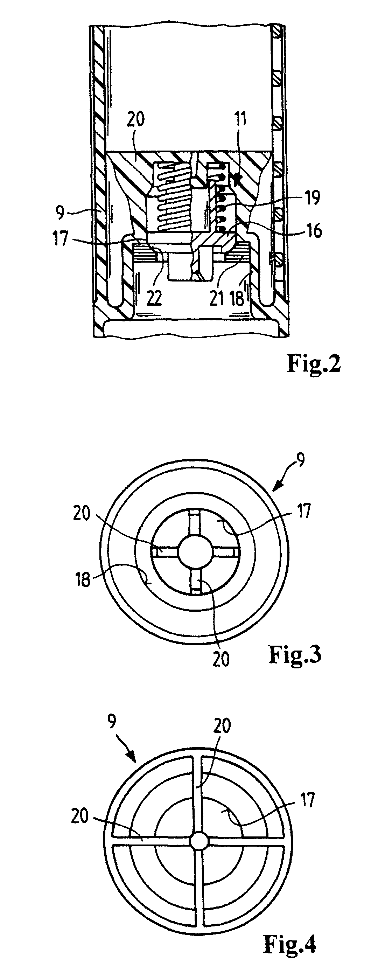

Der Aufbau und die Funktion des Umgehungsventils 11 im Mittelrohr 9 der Filteranordnung 3 soll im Folgenden anhand der Figuren 2, 3 und 4 erläutert werden. Das Umgehungsventil 11 weist einen Ventilkörper 16 auf, der in das innere Loch 17 einer Durchmesserverengung 18 am Mittelrohr 9 gesteckt werden kann. Die Durchmesserverengung 18 ist hier axial in die Mitte des Mittelrohres 9 gezogen, damit das Umgehungsventil 11 frontseitig nicht aus dem Mittelrohr 9 herausragt.

Der Ventilkörper 16 liegt nach dem Einstecken über eine Ventilfeder 19 in einer Ausnehmung von Stegen 20, wobei diese Stege 20 den Anschlag für die Ventilfeder 20 bilden. Die Lage der Stege 20 ist insbesondere aus den Figuren 3 und 4 zu erkennen. Die Figur 3 zeigt eine Ansicht auf das Mittelrohr 9 (in der Richtung, in der das Umgehungsventil 11 eingebracht wird, ohne das Umgehungsventil 11) damit die Stege 20 als Anschlag für die Ventilfeder 19 sichtbar werden. Die Figur 4 zeigt die Stege 20 in einer Rückansicht in das Mittelrohr 9 (in der Zeichnungsebene nach Figur 2 von oben), wobei hier das Umgehungsventil 11 im inneren Loch 17 zu liegen käme. Das Mittelrohr 9, die Durchmesserverengung 18 und die Stege 20 sind vorzugsweise ein einstückiges Kunststoffspritzgussteil.

Aus der Figur 2 ist die Lage des Umgehungsventils 11 im fertig montierten Zustand erkennbar. Vor der endgültigen Montage ragt der Ventilkörper 16 aufgrund der ungespannten Ventilfeder 19 etwas über den Rand der Durchmesserverengung 18 hinaus. Zur Fertigstellung des Umgehungsventils 11 wird eine Ventilplatte 21, vorzugsweise aus Kunststoff, mit einer geringen Kraft, die über den Ventilsitz 22 auf den Ventilkörper 16 und auf die Ventilfeder 19 übertragen wird, auf die Durchmesserverengung 18 heruntergedrückt und dort befestigt. Die Befestigung erfolgt vorzugsweise durch Ultraschall- oder Reibverschweißen bzw. durch Verklemmen und Abdichten oder Verkleben.

Das Umgehungsventil 11 weist somit in seiner Ruhelage einen aufgrund der Federkraft der Ventilfeder 19 einen geschlossenen Ventilsitz 22 auf. Bei einer Erhöhung des Drucks des zu filternden Öls oberhalb des Mittelrohrs 9 wird der Ventilkörper gegen die Kraft der Ventilfeder 19 nach unten gedrückt und gibt damit den Ventilsitz 22 für einen Durchfluss frei.

### Bezugszeichenliste

- 1 =: Konditioniereinheit für Schmieröl
- 2 =: Ölkühler
- 3 =: Filteranordnung
- 4 =: Öleinlassströmumg
- 5 =: Kühlmitteleinlassströmung
- 6 =: Öl-Kühlmittel-Wärmetauscher
- 7 =: Kühlmittelauslass
- 8 =: Filterpatrone
- 9 =: Mittelrohr
- 10 =: Ölauslassströmung
- 11 =: Umgehungsventil
- 12 =: Umgehungsströmung
- 13 =: Auslassschraube
- 14 =: Imbus
- 15 =: Auslassströmung
- 16 =: Ventilkörper
- 17 =: inneres Loch in der Durchmesserverengung
- 18 =: Durchmesserverengung
- 19 =: Ventilfeder
- 20 =: Stege
- 21 =: Ventilplatte
- 22 =: Ventilsitz

## Patentansprüche

1. Filteranordnung für eine zu filternde Flüssigkeit, mit
- einer konzentrisch um ein durchströmbares Mittelrohr (9) angeordneten Filterpatrone (8), wobei die zu filternde Flüssigkeit von radial außen durch die Filterpatrone (8) in das Mittelrohr (9) strömt und mit
- einem Umgehungsventil (11), durch das die Flüssigkeit unter vorgebbaren Bedingungen direkt von außen durch einen Umgehungskanal in das Mittelrohr (9) gelangen kann,
- im Mittelrohr (9) an dem Ende, an dem der Umgehungskanal einmündet, eine ringförmige Durchmesserverengung (18) zur Aufnahme des Umgehungsventils (11) angebracht ist, daß
- hinter der Durchmesserverengung (18) axial verlaufende Stege (20) im Mittelrohr (9) angeordnet sind, die Ausnehmungen zur Aufnahme des Ventilkörpers (16) mit einer Ventilfeder (19) aufweisen,
- wobei der Ventilsitz (22) des Ventilkörpers (16) durch die Ventilfeder (19) gegen eine in der Durchmesserverengung (18) montierte Ventilplatte (21) gedrückt wird, und
- wobei die Ventilplatte (21) zur dichten Anlage an den Ventilsitz (22) des Ventilkörpers (16) gegen den Druck der Ventilfeder (19) einschiebbar und außen an der Durchmesserverengung (18) dauerhaft befestigbar ist.

2. Filteranordnung nach Anspruch 1, **dadurch gekennzeichnet, dass**
- die Stege (20) über einen Teilbereich der Länge des Mittelrohres (9) sich sternförmig zur Achse des Mittelrohres (9) hin erstrecken.

3. Filteranordnung nach Anspruch 1 oder 2, **dadurch gekennzeichnet, dass**
- das Mittelrohr (9), die Durchmesserverengung (18) und die Stege (20) einstückig als Kunststoffspritzgussteil hergestellt sind.

4. Filteranordnung nach einem der vorhergehenden Ansprüche, **dadurch gekennzeichnet, dass**
- die Ventitplatte (21) an der den Ventilsitz (22) bildenden Seite elastomerbeschichtet ist.

5. Filteranordnung nach einem der vorhergehenden Ansprüche, **dadurch gekennzeichnet, dass**
- die Ventilplatte (21) aus Kunststoff hergestellt ist und durch Ultraschallverschweißen, Rotationsschweißen, Verkleben oder Verstemmen mit Abdichten mit der Durchmesserverengung (18) des Mittelrohres (9) verbindbar ist.

6. Konditioniereinheit zur Konditionierung von Schmieröl in einem Kraftfahrzeug, **dadurch gekennzeichnet, dass**
- die Filteranordnung (3) gemäß einem der vorhergehenden Ansprüche an einen Grundkörper der Konditioniereinheit (1) anfügbar ist, wobei die Konditioniereinheit (1) auch einen Ölkühler (2), einen Öl-Kühlmittel-Wärmetauscher (6) und ein weiteres Umgehungsventil für den Öl-Kühlmlttel-Wärmetauscher (6) beinhaltet.

7. Konditioniereinheit nach Anspruch 6, **dadurch gekennzeichnet, dass**
- der Grundkörper der Konditioniereinheit (1) ein Aluminium- oder Kunststoffgussteil ist und mit Anschlüssen und innenliegenden Kanälen zur Führung des Schmieröls und des Kühlmittels versehen ist.

## Claims

1. Filter arrangement for a liquid to be filtered, with
- a filter cartridge (8) arranged concentrically around a middle pipe (9) , a flow being able to flow through the said middle pipe, wherein the liquid to be filtered flows radial from outside through the filter cartridge (8) into the middle tube (9) and with
- a bypass valve (11) through which the liquid is able to arrive under determined conditions directly from outside through a bypass channel into the middle pipe (9),
- an annular restriction of the diameter (18) in the middle pipe (9) , where the bypass channel enters ; the restriction being attached to the said end of the pipe for receiving the bypass valve (11) so that:
- axially extending beams (20) are arranged behind the restriction of the diameter, the said beams comprising recesses for receiving the valve body (16) with a valve spring (19,
- whereby the valve seat (22) of the valve body is pressed by means of the valve spring (19) against a valve plate (21) mounted in the restriction of the diameter, and
- whereby the valve plate (21) is able to be slid for a tight application on the valve seat (22) of the valve body (16) against the pressure of the valve spring (19) and is able to be attached permanently outside of the restriction of the diameter (18).

2. Filter arrangement according to claim 1, **characterized in that**
- the beams (20) extend, in the form of a star with respect to the axis of the middle pipe, over a part of the length of the middle pipe (9).

3. Filter arrangement according to claim 1 or 2, **characterized in that** the middle pipe (9), the restriction of the diameter (18) and the beams (20) are realised in a one-piece plastic injection moulding part.

4. Filter arrangement according to one of the preceding claims, **characterized in that**
- the valve plate (21) is covered by an elastomer on the side forming the valve seat (22).

5. Filter arrangement according to one of the preceding claims, **characterized in that**
- the valve plate (21) is made of plastics and is able to be linked to the restriction of the diameter (18) of the middle pipe (9) by means of ultrasound welding, rotational welding, sticking or matting with sealing.

6. Conditioning unit for conditioning a lubricating oil in a vehicle, **characterized in that**
- the filter arrangement (3) according to one of the preceding claims is able to be assembled to a basic body of the conditioning unit (1) , whereby yhe conditioning unit (1) comprises also an oil cooler (2), an oil - refrigerant heat exchanger (6) and another bypass valve for the oil - refrigerant heat exchanger (6).

7. Conditioning unit according to claim 6, **characterized in that**
- the basic body of the conditioning unit (1) is an aluminium or plastic moulding part.

## Revendications

1. Disposition de filtre destiné à filtrer un liquide, comportant
- une cartouche de filtre (8) disposée de façon concentrique autour d'un tube médian (9) susceptible d'être parcouru par un flux ; le liquide à filtrer s'écoulant radialement de l'extérieur à travers la cartouche de filtre (8) vers le tube médian (9) et comportant :
- une valve de dérivation (11) à travers laquelle le liquide peut atteindre selon des conditions prédéterminées, directement de l'extérieur, le tube médian (9) à travers un canal de dérivation,
- un rétrécissement de diamètre (18) annulaire destiné à recevoir la valve de dérivation (11) disposée dans le tube médian (9) sur l'extrémité où le canal de dérivation débouche, de manière à ce que
- des traverses (20) s'étendent de manière axiale derrière le rétrécissement de diamètre (18) et disposées dans le tube médian (9) ; lesquelles traverses présentent des évidements destinées à recevoir le corps de valve (16) avec un ressort de valve (19),
- le siège de valve (22) du corps de valve (16) étant pressé par le ressort de valve (19) contre une plaque de valve (21) montée dans le rétrécissement de diamètre (18), et
- la plaque de valve (21) pouvant être glissée contre la pression du ressort de valve (19) pour assurer une application étanche au siège de valve (22) du corps de valve (16) et laquelle plaque de valve pouvant être fixée de façon permanente à l'extérieur sur le rétrécissement de diamètre (18).

2. Disposition de filtre selon la revendication 1, **caractérisé en ce que** :
- les traverses (20) s'étendent sur une partie de la longueur du tube médian (9) en formant une étoile par rapport à l'axe du tube médian (9).

3. Disposition de filtre selon la revendication 1 ou 2, **caractérisé en ce que** :
- le tube médian (9), le rétrécissement de diamètre (18) et les traverses (20) sont fabriqués d'une pièce en tant que pièce en matière plastique moulée par injection .

4. Disposition selon une des revendications précédentes, **caractérisée en ce que** :
- la plaque de valve (21) est recouverte d'une couche d'élastomère sur le coté formant le siège de valve (22).

5. Disposition selon une des revendications précédentes, **caractérisée en ce que** :
- la plaque de valve (21) est fabriquée en matière plastique et **en ce qu'**elle peut être reliée par une soudure à ultrason, une soudure à rotation, par collage ou par matage avec étanchéité par rapport au rétrécissement de diamètre (18) du tube médian (9).

6. Unité de conditionnement pour conditionner de l'huile lubrifiant, dans un véhicule automobile, **caractérisé en ce que** :
- la disposition de filtre (3) est susceptible d'être assemblée selon une des revendications précédentes sur un corps de base de l'unité de conditionnement (1) ; ladite unité de conditionnement (1) comprenant également un refroidisseur d'huile (2) un échangeur de chaleur huile - réfrigérant (6) et une valve de dérivation supplémentaire pour l'échangeur de chaleur huile - réfrigérant (6).

7. Unité de conditionnement selon la revendication 6, **caractérisé en ce que** :
- le corps de base de l'unité de conditionnement (1) est une pièce de moulage en aluminium ou en matière plastique et est pourvu de raccords et de canaux situés à l'intérieur pour conduire l'huile lubrifiant et le liquide de refroidissement.
